# EUROPÄISCHE PATENTANMELDUNG

(11) **EP 1 101 432 A2**
(43) Veröffentlichungstag der Anmeldung: **23.05.2001**
(21) Anmeldenummer: 00125092.7
(22) Anmeldetag: 17.11.2000
(51) Int. Cl.: A47J 37/07

(54) **Bräter, ausgebildet als Koffergrillgerät**

(30) Priorität: 22.11.1999 DE 29920435 U
(71) Anmelder: Klahr, Ottfried, 35684 Dillenburg (DE)
(72) Erfinder: Klahr, Ottfried, 35684 Dillenburg (DE)
(74) Vertreter: Valentin, Ekkehard, Dipl.-Ing.

(57) **Zusammenfassung**

Bei einem Bräter, ausgebildet als Koffergrillgerät (1), umfassend eine Unterschale (2) und eine Oberschale (3) als Deckel sowie einen Rost (12) und/oder integrierbare Aufbauten zur Aufnahme einer Spießgarnitur ist die Befeuerung (4) direkt in der Unterschale (2) angeordnet.

## Beschreibung

Die Erfindung betrifft einen Bräter, ausgebildet als Koffergrillgerät, umfassend eine Unterschale und eine Oberschale als Deckel sowie einen Rost und/oder integrierbare Aufbauten zur Spießgarnituraufnahme.

Derartige Bräter sind als Gasgrillgeräte in vielfältigsten Ausführungen als entweder Tischgerät oder durch Bestückung mit an der Unterschale zu montierenden Beinen als auf dem Boden aufzustellende Standgeräte bekannt. Allen diesen Koffergrillgeräten, die zum Transport mit einem Handgriff an der Unterschale oder der Oberschale bzw. dem Deckel versehen sein können, ist einerseits gemeinsam, daß sie mit einer Befeuerung von oben ausgebildet sind und folglich mit Oberhitze braten, grillen oder kochen. Hierzu ist in der Unterschale ein aus vertikalen Seitenwänden mit horizontalen Schlitzöffnungen zum Aufnehmen einer Spießgarnitur und eine die beiden Seitenwände miteinander verbindende Deckwand bestehender Gehäuseaufbau angeordnet. Dieser wird rückwärtig von dem aufgerichteten Deckel des Koffergrillgerätes begrenzt. Die hochliegende Deckwand des Gehäuseaufbaus ist mit-Kochplatten und einem Gasanschluß versehen. Zwischen die Seitenwände des Gehäuseaufbaus läßt sich für den Spieß- bzw. Rostbetrieb gegebenenfalls noch eine Fettschale einschieben. Andererseits sind bei den bekannten Koffergrillgeräten die Oberschalen bzw. Deckel an die Unterschale anscharniert und folglich fest mit dieser verbunden.

Der Erfindung liegt daher die Aufgabe zugrunde, ein Koffergrillgerät der eingangs genannten Art mit variableren und verbesserten Verwendungseigenschaften zu ermöglichen.

Diese Aufgabe wird erfindungsgemäß in verblüffend einfacher Weise dadurch gelöst, daß die Befeuerung direkt in der Unterschale angeordnet ist. Dieser von der herkömmlichen Technik mit Oberhitze völlig abweichenden Befeuerung von unten liegt die Erkenntnis zugrunde, daß damit die Voraussetzung für unterstützende Maßnahmen zur Erreichung eines multifunktionalen Koffergrillgerätes geschaffen wird, das für die Nutzung im Freizeit- und Campingbereich eine große Variabilität bietet.

Nach einer bevorzugten Ausführung der Erfindung ist eine aus mit Austrittsöffnungen versehenen Röhrchen bestehende geschlossene Gasbrennereinheit in der einen Gasanschluß aufweisenden Unterschale angeordnet. Es liegt damit eine Gasbefeuerung vor, wie sie bei anderen Brätern als Koffergrillgeräten üblich und beispielsweise durch das DE U-296 20 678.4 bekanntgeworden ist. Die dort in der Gerätewanne angeordnete, von einem Zünder zu zündende Brenneinheit weist mehrere annähernd U-förmige, mit Gas-Austrittsöffnungen versehene Rohrschenkel und eine diesen zugeordnete Gaszuführung auf.

Wenn erfindungsgemäß ein seitlich aus der Unterschale hervorragender Betätigungsknebel über ein Gestänge, das im Bereich der Seitenwand der Unterschale in eine nach oben offene Wandausnehmung eingesetzt ist, mit der Gasbrennereinheit verbunden ist, läßt sich das Koffergrillgerät ohne weiteres zur Kohle- bzw. Holzkohle-Befeuerung nutzen. Denn es braucht lediglich die lose in der Unterschale liegende Gasbrennereinheit angehoben zu werden, bis sie aus der Wandausnehmung freikommt und danach insgesamt entfernt werden kann. Die Unterschale steht danach zur Befüllung mit Kohle bzw. Holzkohle zur Verfügung.

Eine weitere vorteilhafte Ausgestaltung der Erfindung sieht vor, daß der Deckel, die Unterschale und die Spießgarnitur-Aufbauten mit Steckverbindern versehen sind. Das Koffergrillgerät läßt sich somit in seine Einzelteile zerlegen, was es in vorteilhafter Weise erlaubt, die Oberschale bzw. den Deckel sogleich als Pfanne zu gebrauchen, die sich auf den in die Unterschale eingesetzten Rost abstellen läßt. Da der als Pfanne verwendete Deckel separat handhabbar ist, läßt er sich einfach reinigen und gegebenenfalls sogar in eine Spülmaschine legen.

Nach einem weiteren Vorschlag der Erfindung weist das Koffergrillgerät aus Edelstahl ausgebildete Schalen und Aufbauten auf. Dies führt nicht nur zu einer hochwertigen Qualität mit erhöhter Lebensdauer, sondern erleichtert auch die Reinigung der einzelnen Geräte-Bauteile, insbesondere des Deckels nach dessen Verwendung als Pfanne.

Weitere Einzelheiten und Vorteile der Erfindung ergeben sich aus den Ansprüchen und der nachfolgenden Beschreibung, in der in den Zeichnungen dargestellte Ausführungsbeispiele des Gegenstandes der Erfindung näher erläutert sind. Es zeigen:
- Fig. 1: ein Koffergrillgerät in explosiver, perspektivischer Darstellung; und
- Fig. 2: in perspektivischer Darstellung ein zum Spießbetrieb umgerüstetes Koffergrillgerät.

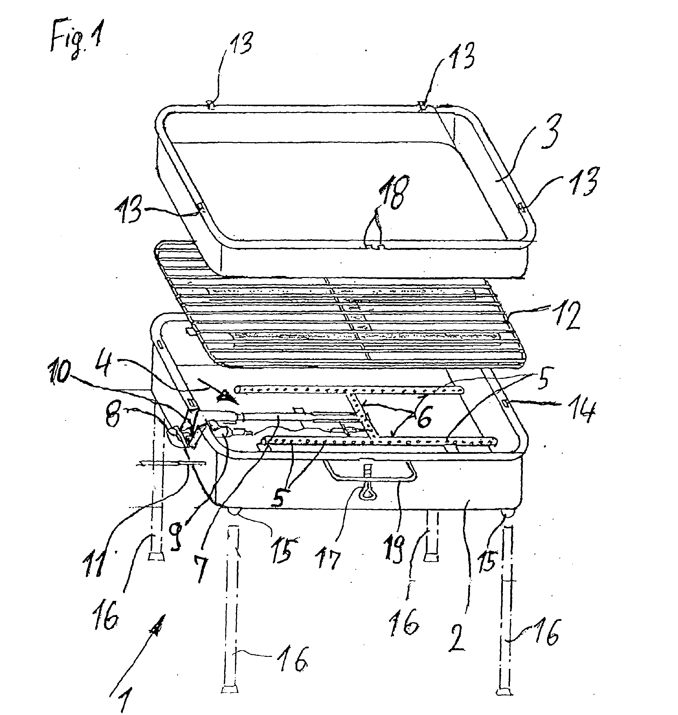

Ein Koffergrillgerät 1 weist als elementare Bestandteile eine Unterschale 2 und einen Deckel bzw. eine Oberschale 3 auf. Beim Betrieb mit Gasbefeuerung ist in der Unterschale 2 eine das eingeleitete Gas in einem geschlossenen Kreislauf führende Gasbrennereinheit 4 angeordnet, die aus an ihren Stirnenden verschlossenen, mit Austrittsöffnungen 5 versehenen Röhrchen 6 besteht, die hier eine H-förmige Einheit bilden (vgl. Fig. 1). Die Gasbrennereinheit 4 ist über ein Gestänge 7 mit einem seitlich aus der Unterschale 2 hervorragenden Betätigungsknebel 8 verbunden, an den auch ein Piezozünder 9 der Gasbrennereinheit 4 angeschlossen ist. Das knebelseitige Ende des Gestänges 7 ist in eine nach oben offene Wandausnehmung 10 einer Seitenwand der Unterschale 2 eingesetzt und daher ohne weiteres nach oben anhebbar, so daß sich die Gasbrennereinheit 4 einfach aus der Unterschale 2 entfernen läßt. Seitlich neben dem Betätigungsknebel 8 befindet sich ein Gasanschlußröhrchen 11 zur Verbindung an eine nicht gezeigte Gasflasche.

Die in Fig. 1 gezeigte Variante des Koffergrillgerätes 1 veranschaulicht dessen Nutzung im Pfannenbetrieb, wobei der Deckel bzw. die Oberschale 3 als Pfanne dient und nach dem Einlegen des Rostes 12 in die Unterschale 2 auf diesen abgestellt wird. Sowohl die Unterschale 2 als auch die Oberschale 3 bestehen aus einem hochwertigen Edelstahl (V2A). Die Nutzung der Oberschale 3 gleichzeitig auch als Pfanne wird durch die Befeuerung von unten und weiterhin dadurch möglich, daß die Oberschale 3 über Steckverbinder 13 mit komplementären Steckmitteln 14 der Unterschale 2 lösbar verbunden und damit nach dem Entrasten separat handhabbar ist. Wenn das Koffergrillgerät 1 nicht als Tischgerät, sondern als Standgrill genutzt werden soll, können auf an der Unterseite der Unterschale 2 eckseitig vorhandenen Noppen 15 die strichpunktiert gezeigten Standbeine 16 aufgesteckt werden. Im nicht gezeigten Transportzustand des Koffergrillgerätes 1 wird die mit ihren Steckverbindern 13 in die komplementären Steckmittel 14 in der Rückwand und den Seitenwänden der Unterschale 2 eingerastete Oberschale 3 mit komplementären Riegelmitteln 17, 18 festgelegt, so daß die einander ergänzenden Schalen eine geschlossene, kompakte Transporteinheit darstellen. Zum Transportieren ist an der Unterschale 2 ein Handgriff 19 vorgesehen.

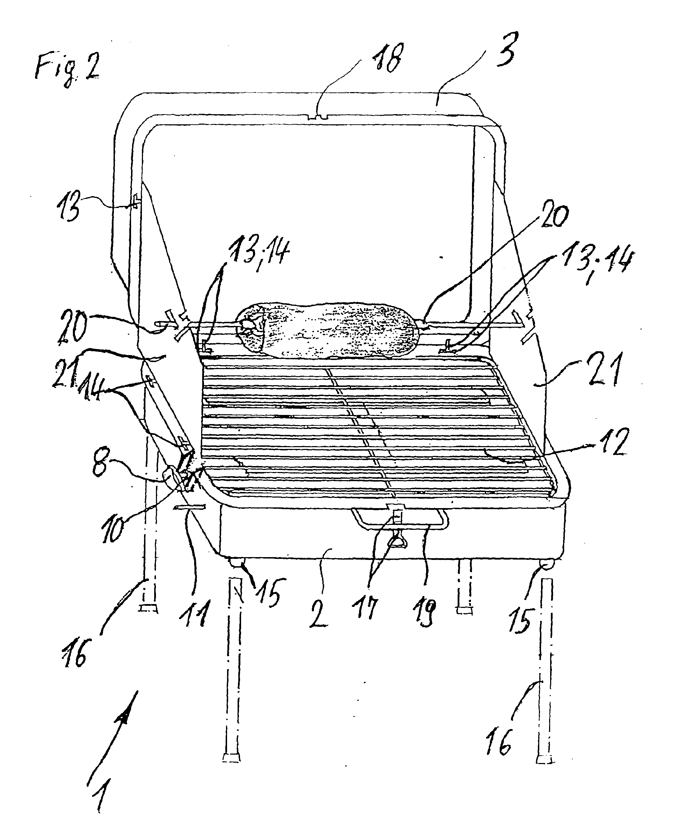

Die Nutzung des Koffergrillgerätes 1 zum Spießbetrieb ist in Fig. 2 dargestellt, in der die schon im Zusammenhang mit Fig. 1 beschriebenen Einzelteile mit denselben Bezugsziffern versehen sind. Der Deckel bzw. die Oberschale 3 ist hier in eine aufrechte Position geklappt. Zur Aufnahme einer Spießgarnitur 20 sind wiederum lediglich durch Stecken als Aufbau zwei Seitenwandteile 21 aus Edelstahl einerseits mit der Unterschale 2 und andererseits mit der Oberschale 3 zu einer stabilen Lage verrastet. Der oberhalb der Gasbefeuerung angeordnete Rost 12 ermöglicht bei der Ausführung nach Fig. 2 statt des Spießbetriebs einen alternativen Rostbetrieb, indem das Grillgut - nicht gezeigt - statt mittelbar über die Spießgarnitur 20 direkt auf den Rost abgelegt wird.

Die aufgrund der Befeuerung von unten und die Steckverbindertechnik erreichte multifunktionale Nutzung desselben Koffergrillgerätes zum Rost-, Spieß- und Pfannenbetrieb, ohne hierzu ein weiteres externes Einzelteil, z.B. separate Pfannen zu benötigen, wird noch dadurch erhöht, daß die Gasbrennereinheit 4 über die Wandausnehmung 10 aus der Unterschale 2 entfernbar ist, ohne die Gasbrennereinheit 4 hierbei demontieren zu müssen. Der aus dem Gerät hervorragende Betätigungsknebel 8 braucht nicht etwa von dem Gestänge 7 abgezogen zu werden, wie das bei einer alternativen lösbaren Verbindung zwischen dem Betätigungsknebel 8 und dem Gestänge 7 der Fall wäre. Die von der Gasbrennereinheit 4 befreite Unterschale 2 steht danach zur Befüllung mit Briketts bzw. Hohlkohle zur Verfügung.

## Patentansprüche

1. Bräter, ausgebildet als Koffergrillgerät (1), umfassend eine Unterschale (2) und eine Oberschale (3) als Deckel sowie einen Rost (12) und/oder integrierbare Aufbauten zur Aufnahme einer Spießgarnitur (20),
**dadurch gekennzeichnet**,
daß die Befeuerung (4) direkt in der Unterschale (2) angeordnet ist.

2. Bräter nach Anspruch 1,
**dadurch gekennzeichnet,**
daß eine aus mit Austrittsöffnungen (5) versehenen Röhrchen (6) bestehende geschlossene Gasbrennereinheit (4) in der einen Gasanschluß (11) aufweisenden Unterschale (2) angeordnet ist.

3. Bräter nach Anspruch 2,
**dadurch gekennzeichnet,**
daß ein seitlich aus der Unterschale (2) hervorragender Betätigungsknebel (8) über ein Gestänge (7), das im Bereich der Seitenwand der Unterschale (2) in eine nach oben offene Wandausnehmung (10) eingesetzt ist, mit der Gasbrennereinheit (4) verbunden ist.

4. Bräter nach einem der Ansprüche 1 bis 3,
**dadurch gekennzeichnet.**
daß die Oberschale (3), die Unterschale (2) und die Spießgarnitur-Aufbauten (21) mit Steckverbindern (13, 14) versehen sind.

5. Bräter nach einem der Ansprüche 1 bis 4,
**dadurch gekennzeichnet**,
daß er aus Edelstahl ausgebildete Schalen (2 bzw. 3) und Aufbauten (21) aufweist.
